# EUROPEAN PATENT APPLICATION

(11) **EP 2 693 263 A1**
(43) Date of publication of application: **05.02.2014**
(21) Application number: 12190521.0
(22) Date of filing: 30.10.2012
(51) Int. Cl.: G02F 1/1333, G06F 1/16, H04N 5/64

(54) **Display device**

(30) Priority: 31.07.2012 JP 2012170185; 31.07.2012 JP 2012004667 U
(71) Applicant: Orion Electric Company, LTD., Echizen-shi, Fukui-ken (JP)
(72) Inventor: Tanaka, Yoshimoto, Fukui-ken (JP); Mukougawa, Hidenobu, Fukui-ken (JP)
(74) Representative: Kirschner, Klaus Dieter

(57) **Abstract**

A display device includes a display panel assembly in which a member having a liquid crystal cell and displaying a video picture thereon is built in a space formed by a front bezel and a back chassis. The front bezel serves as a front cabinet and the back chassis serves as a back cabinet. A control substrate is disposed in the rear surface of the back chassis, and a first cover member which covers the control substrate and a second cover member which is connected to the first cover member so as to substantially form an inverse T-shape and covers the other component are attached to the rear surface.

## Description

The present invention relates to a display device such as a monitor or a television receiver that displays a video picture thereon.

As a recent display device, a thin display device with a liquid crystal cell having a small depth compared to the height and the width has been widely used. Such a thin display device is equipped with a circuit board which supplies power or a circuit board which controls a signal input from the outside and displays a video picture in the liquid crystal cell. Then, there have been various attempts to simplify a structure of the display device, realize a decrease in the weight and the thickness of the display device, or improve the designability of the display device.

For example, Japanese Patent Application Laid-Open No. 2000-315054 discloses a structure in which the inside of a casing formed by a front cabinet having a display window and a back cabinet disposed behind the front cabinet is provided with various circuit boards integrated with a display panel assembly having a member for displaying a video picture thereon and built in a space formed by a front bezel and a back chassis on the basis of a reinforcement plate. Accordingly, it is possible to decrease the number of steps of assembling the display device and to decrease the thickness of the display device.

Further, Japanese Patent Application Laid-Open No.2007-163861 discloses a structure in which a display panel assembly, various substrates, and all inner components including a speaker are attached on the chassis as a reference and a front cabinet and a back cabinet are attached thereto. Accordingly, it is possible to simplify the assembly operation and the maintenance operation of the display device and to simplify the shapes of the front cabinet and the back cabinet.

According to the structures of Japanese Patent Application Laid-Open No. 2000-315054 and Japanese Patent Application Laid-Open No. 2007-163861, the assembly workability may be improved by attaching a part or the entirety of the inner components constituting the display device to the reinforcement plate or the chassis. However, in other words, since there is a need to provide a component such as a reinforcement plate or a chassis so as to integrate the inner components, the number of components consequently increases. Further, since the inner components are attached on the basis of the reinforcement plate or the chassis and the exterior of the device is formed by the front cabinet and the back cabinet, a decrease in thickness is difficult. Furthermore, the front cabinet and the back cabinet are formed with a size to be attached with the inner components integrated with the reinforcement plate or the chassis. Particularly, the front cabinet which is positioned at the front surface of the display panel depends on the size of the back cabinet attached from the rear side. As a result, it is difficult to decrease the width of the peripheral edge of the display unit.

Further, according to the structures of Japanese Patent Application Laid-Open No. 2000-315054 and Japanese Patent Application Laid-Open No. 2007-163861, the speaker is disposed in the space formed by the front cabinet and the back cabinet. However, there is a concern that a large speaker needs to be adopted so as to improve the quality of the sound or the sound needs to be electrically improved. At the same time, it is difficult to decrease the size and the thickness of the display device. Further, since there is a need to provide a separate cushion member for suppressing a chatter noise phenomenon caused by the interference between the components through the vibration of the speaker, there is a concern that the number of components increases.

The invention is made in view of the above-described circumstances, and it is an object of the invention to provide a display device which may be decreased in thickness and weight by a minimum number of components. Further, it is an object of the invention to provide a display device which may be assembled with satisfactory workability at low cost. Furthermore, it is an object of the invention to provide a display device which realizes a narrow frame by decreasing a width of a peripheral edge of a display unit and improves designability. Moreover, it is an object of the invention to provide a stable display device even when the size of a stand decreases by lowering a gravity center position of the display device.

Further, it is an object of the invention to provide a display device which may be decreased in size and thickness at low cost in consideration of improvement in quality of a sound. Furthermore, it is an object of the invention to provide a display device capable of suppressing a chatter noise phenomenon generated by the interference between components through the vibration of a speaker.

According to a first aspect, there is provided a display device including: a display panel assembly in which a member displaying a video picture is built in a space formed by a resinous front bezel and a metallic back chassis, in which the front bezel and the back chassis form an exterior of the device.

Further, according to a second aspect, there is provided a display device including: a display panel assembly in which a member displaying a video picture is built in a space formed by a resinous front bezel and a metallic back chassis, in which the front bezel and the back chassis form an exterior of the device, in which a first cover member which covers at least a control substrate and a second cover member which is formed so as to be longer than the first cover member in the horizontal direction at a position lower than the first cover member and covers the other component are disposed at a rear surface of the display panel assembly, and in which the first cover member and the second cover member substantially form an inverse T-shape.

Further, according to a third aspect, there is provided a display device including: a display panel assembly in which a member displaying a video picture is built in a space formed by a resinous front bezel and a metallic back chassis, in which the front bezel and the back chassis form an exterior of the device, in which a first cover member which covers at least a control substrate and a second cover member which is formed so as to be longer than the first cover member in the horizontal direction at a position lower than the first cover member and covers the other component including at least a speaker are disposed at a rear surface of the display panel assembly, and in which the first cover member and the second cover member substantially form an inverse T-shape.

Further, according to a fourth aspect, there is provided the display device according to the second or third aspect, in which the component of the display panel assembly includes a light source, a liquid crystal cell, and a driving circuit board connected to the liquid crystal cell through a flexible printed interconnection board, and in which the light source is disposed at the lower side of the display panel assembly, the driving circuit board is disposed at the lower side of the rear surface of the display panel assembly, and at least the driving circuit board is covered by the second cover member.

Further, according to a fifth aspect, there is provided the display device according to the second or third aspect, in which a step integrated with the back chassis is formed in the rear surface of the display panel assembly except for the installation position of the first cover member and/or the second cover member.

Further, according to a sixth aspect, there is provided the display device according to the second or third aspect, in which the component of the display panel assembly includes a light source, a liquid crystal cell, and a driving circuit board connected to the liquid crystal cell through a flexible printed interconnection board, in which the light source is disposed at the lower side of the display panel assembly, the driving circuit board is disposed at the lower side of the rear surface of the display panel assembly, and at least the driving circuit board is covered by the second cover member, and in which a step is formed in the rear surface of the display panel assembly integrally with the back chassis except for the installation position of the first cover member and/or the second cover member.

Further, according to a seventh aspect, there is provided the display device according to the first aspect, in which at least a speaker and a second cover member partially covering the speaker with respect to the back chassis are disposed in a rear surface of the display panel assembly, and in which a bottom surface of the second cover member is provided with an output hole which outputs a sound of the speaker to the outside, and a plurality of small holes are provided behind the second cover member.

Further, according to an eighth aspect, there is provided the display device according to the first aspect, in which at least a speaker and a second cover member partially covering the speaker with respect to the back chassis are disposed in a rear surface of the display panel assembly, in which a bottom surface of the second cover member is provided with an output hole which outputs a sound of the speaker to the outside, and a plurality of small holes are provided behind the second cover member, in which the second cover member is positioned at the lower side of the rear surface of the display panel assembly, in which at least a control substrate and a first cover member covering the control substrate are disposed at a position above the second cover member, and in which the first cover member and the second cover member substantially form an inverse T-shape, and the first cover member and the second cover member form a connection hole therein.

Further, according to a ninth aspect, there is provided the display device according to the first aspect, in which at least a speaker and a second cover member partially covering the speaker with respect to the back chassis are disposed in a rear surface of the display panel assembly, in which a bottom surface of the second cover member is provided with an output hole which outputs a sound of the speaker to the outside, and a plurality of small holes are provided behind the second cover member, and in which a plurality of protrusion portions are formed in a contact portion between the second cover member and the back chassis.

Further, according to a tenth aspect, there is provided the display device according to the first aspect, in which at least a speaker and a second cover member partially covering the speaker with respect to the back chassis are disposed in a rear surface of the display panel assembly, in which a bottom surface of the second cover member is provided with an output hole which outputs a sound of the speaker to the outside, and a plurality of small holes are provided behind the second cover member, in which a plurality of protrusion portions are formed in a contact portion between the second cover member and the back chassis, in which the second cover member is positioned at the lower side of the rear surface of the display panel assembly, in which at least a control substrate and a first cover member covering the control substrate are disposed at a position above the second cover member, and in which the first cover member and the second cover member substantially form an inverse T-shape, and the first cover member and the second cover member form a connection hole therein.

Further, according to an eleventh aspect, there is provided the display device according to the first aspect, in which at least a speaker and a second cover member partially covering the speaker with respect to the back chassis are disposed in a rear surface of the display panel assembly, and in which the speaker is attached to the second cover member through a cushion member, a bottom surface of the second cover member is provided with an output hole which outputs a sound of the speaker to the outside, and a plurality of small holes are provided behind the second cover member.

Further, according to a twelfth aspect, there is provided the display device according to the first aspect, in which at least a speaker and a second cover member partially covering the speaker with respect to the back chassis are disposed in a rear surface of the display panel assembly, in which the speaker is attached to the second cover member through a cushion member, a bottom surface of the second cover member is provided with an output hole which outputs a sound of the speaker to the outside, and a plurality of small holes are provided behind the second cover member, in which the second cover member is positioned at the lower side of the rear surface of the display panel assembly, in which at least a control substrate and a first cover member covering the control substrate are disposed at a position above the second cover member, and in which the first cover member and the second cover member substantially form an inverse T-shape, and the first cover member and the second cover member form a connection hole therein.

Further, according to a thirteenth aspect, there is provided the display device according to the first aspect, in which at least a speaker and a second cover member partially covering the speaker with respect to the back chassis are disposed in a rear surface of the display panel assembly, in which the speaker is attached to the second cover member through a cushion member, a bottom surface of the second cover member is provided with an output hole which outputs a sound of the speaker to the outside, and a plurality of small holes are provided behind the second cover member, and in which a plurality of protrusion portions are formed in a contact portion between the second cover member and the back chassis.

Further, according to a fourteenth aspect, there is provided the display device according to the first aspect, in which at least a speaker and a second cover member partially covering the speaker with respect to the back chassis are disposed in a rear surface of the display panel assembly, in which the speaker is attached to the second cover member through a cushion member, a bottom surface of the second cover member is provided with an output hole which outputs a sound of the speaker to the outside, and a plurality of small holes are provided behind the second cover member, in which a plurality of protrusion portions are formed in a contact portion between the second cover member and the back chassis, in which the second cover member is positioned at the lower side of the rear surface of the display panel assembly, in which at least a control substrate and a first cover member covering the control substrate are disposed at a position above the second cover member, and in which the first cover member and the second cover member substantially form an inverse T-shape, and the first cover member and the second cover member form a connection hole therein.

According to the configuration of the invention, since the resinous front bezel constituting the display panel assembly serves as the front cabinet of the related art and the metallic back chassis serves as the back cabinet of the related art, it is possible to manufacture the display device by assembling a minimum number of components on the basis of the display panel assembly and hence to provide the display device which is thin and light. Further, it is possible to assemble the display device by a simple operation of just sequentially assembling the components such as the speaker constituting the display device or various substrates on the basis of the display panel assembly and to provide a display device which has improved workability and low cost. Furthermore, since the front bezel constitutes the exterior of the display device instead of the front cabinet of the related art and the width of the front bezel directly becomes the width of the peripheral edge of the display unit in the display device, it is possible to narrow the frame of the peripheral edge of the display unit and hence to provide a display device having excellent designability. Moreover, since the components of the display device may be integrally disposed at the comparatively lower side of the display panel assembly, it is possible to define the gravity center of the display device at a low position. Accordingly, it is possible to provide a stable display device which does not easily fall, for example, even when the installation area of the stand decreases.

Further, since the small hole is formed in the second cover member disposed at the rear surface of the display panel assembly, it is possible to improve the quality of the sound of the speaker while realizing a decrease in the size of the display device. Furthermore, since the inner spaces of the second cover member and the first cover member are shared by providing the connection hole, it is possible to further improve the quality of the sound of the speaker. Moreover, since the plurality of protrusion portions are provided in the second cover member so as to contact the back chassis, it is possible to suppress the vibration of the speaker and hence to suppress the generation of the chatter noise caused by the interference between the components without providing a separate vibration-proof member.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings
- Fig. 1: a front perspective view illustrating a display device of an embodiment of the invention;
- Fig. 2: an exploded perspective view illustrating a configuration of a display panel assembly of the embodiment of the invention;
- Fig. 3: a schematic side cross-sectional view illustrating a molding die for a front bezel of the embodiment of the invention;
- Fig. 4: a schematic rear partially enlarged perspective view illustrating a material injection position of a front bezel unit of the embodiment of the invention;
- Fig. 5: a rear exploded perspective view illustrating a configuration of the display device of the embodiment of the invention;
- Fig. 6: a perspective view illustrating an inner surface of a first cover member of the embodiment of the invention;
- Fig. 7: a schematic rear transparent view of a display panel assembly of the embodiment of the invention;
- Fig. 8: a rear view of the display panel assembly of the embodiment of the invention;
- Fig. 9: a rear view of a display panel assembly of another embodiment of the invention;
- Fig. 10: an exploded perspective view illustrating an inner surface of a second cover member of the embodiment of the invention;
- Fig. 11: a partially enlarged perspective view illustrating the inner surface of the second cover member of the embodiment of the invention;
- Fig. 12: a schematic partially cross-sectional perspective view illustrating a connection position between a first cover member and the second cover member of the embodiment of the invention;
- Fig. 13: a schematic rear view illustrating the display device of the embodiment of the invention;
- Fig. 14: a schematic side cross-sectional view illustrating the second cover member of the embodiment of the invention, and
- Fig. 15: a schematic rear transparent view of the display device of the embodiment of the invention.

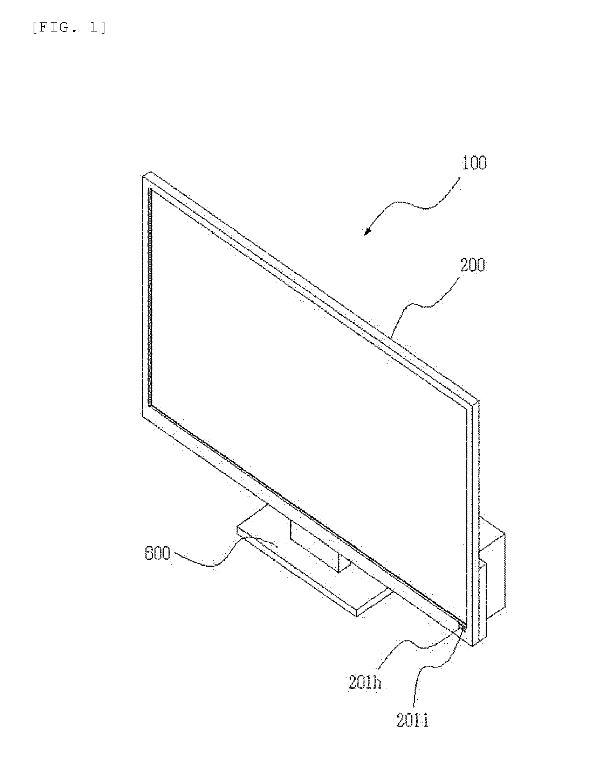

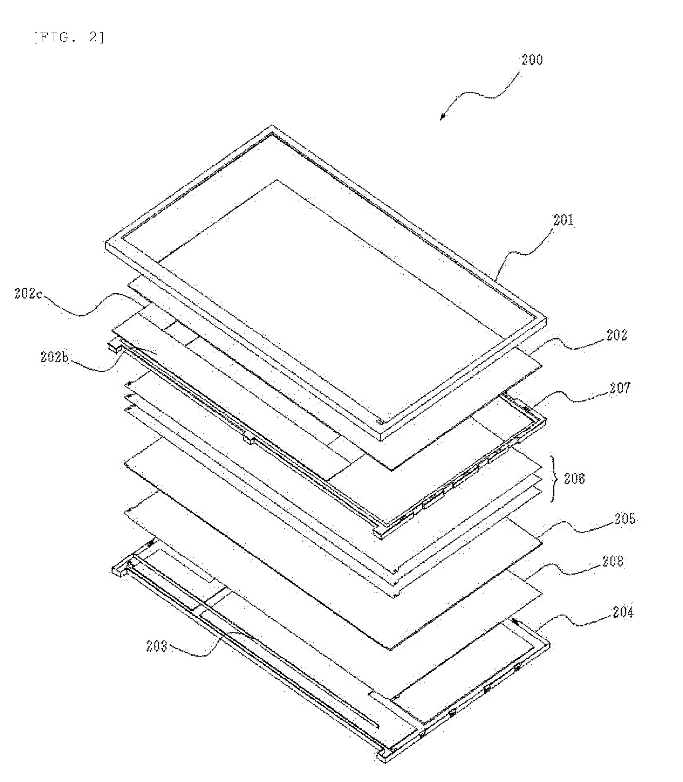

Fig. 1 is a front perspective view illustrating a display device of an embodiment of the invention, and Fig. 2 is an exploded perspective view illustrating a configuration of a display panel assembly of the embodiment of the invention. In the drawings, respectively provided are a display device 100, a display panel assembly 200 which constitutes a display unit of the display device 100, a front bezel 201, a liquid crystal cell 202 which displays a video picture thereon, a light source 203 which causes light to be transmitted through the liquid crystal cell 202 from the rear side thereof, a back chassis 204, a light guiding plate 205 which receives the light emitted from the light source 203 from one end surface so as to evenly brighten a screen, an optical sheet 206 which diffuses and condenses the light guided by the light guiding plate 205, a middle frame 207 which is positioned before the optical sheet 206, and a reflection sheet 208 which is positioned between the back chassis 204 and the light guiding plate 205.

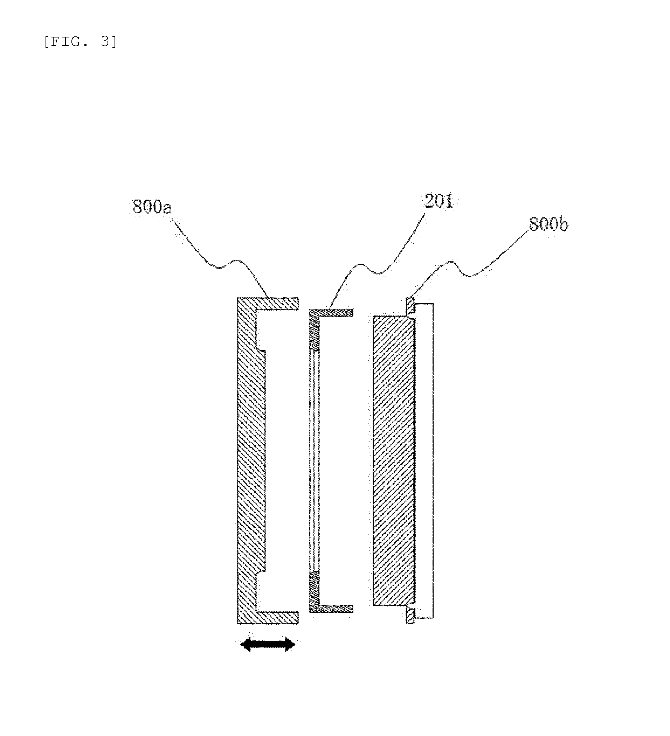

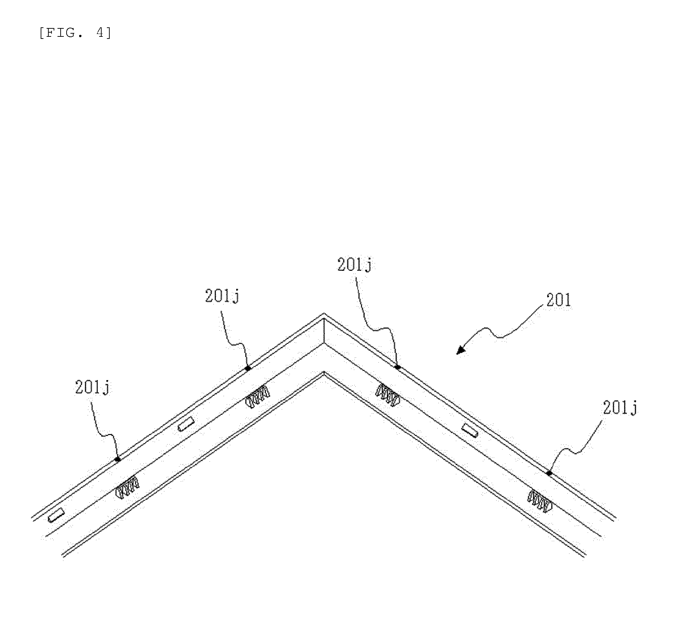

In the embodiment of the invention, the front bezel 201 is formed by molding a resin material such as polystyrene. Fig. 3 is a schematic side cross-sectional view illustrating a molding die for the front bezel of the embodiment of the invention, and Fig. 4 is a schematic rear partially enlarged perspective view illustrating a material injection position of a front bezel unit of the embodiment of the invention. As illustrated in the same drawings, a plurality of material injection positions 201j, 201j, ... are provided near the rear surface side edge of the front bezel 201. Then, the front bezel 201 is formed by hot runner molding that injects a material into a fixed die 800b and separates a molded product. By the hot runner molding, only the front bezel 201 as the molded product is discharged by suppressing the discharge of a sprue and a runner, whereby an extra material cost may be suppressed. Further, since the material injection positions 201j, 201j, ... are provided near the peripheral edge of the front bezel 201, it is possible to prevent the interference between the material injection positions 201j and components such as the liquid crystal cell 202 constituting the display panel assembly 200. Then, since the front bezel 201 serves as the front surface of the display panel assembly 200 and also serves as a front surface side outer casing of the display device 100, there is no need to provide a front cabinet constituting an additional front surface side outer casing and to provide a display device that decreases the thickness thereof and narrows the frame thereof. Furthermore, the material of the front bezel 201 of the invention is not limited to polystyrene, and a material which is generally called a resin may be appropriately used.

Further, in the embodiment of the invention, the back chassis 204 is molded by a metal member such as a steel plate. Then, since the back chassis 204 serves as the rear surface of the display panel assembly 200 and also serves as a part of the rear surface side outer casing of the display device 100, there is no need to provide an additional back cabinet constituting the rear surface side outer casing and hence to provide a display device that further decreases the thickness thereof. Furthermore, the material of the back chassis 204 of the invention is not limited to the steel plate, and a material which is generally called metal may be appropriately used.

The display panel assembly 200 is made by attaching various components including the liquid crystal cell 202 and the light source 203 to display a video picture into a space which is formed by assembling the front bezel 201 and the back chassis 204. Further, the liquid crystal cell 202 and a driving circuit board 202b are connected to each other through flexible printed interconnection boards 202c and 202c. Then, the light source 203 is disposed at the lower end inside the space of the display panel assembly 200, and the driving circuit board 202b is attached to the lower side of the rear surface of the back chassis 204 by screwing. That is, since the light source 203 and the driving circuit board 202b are disposed at one side of the display panel assembly 200, it is possible to decrease the thickness of the other side of the display panel assembly 200 and hence to further narrow the frame of the peripheral edge of the display unit. Furthermore, in the case of the embodiment, the thickness of the upper side of the display panel assembly 200 is decreased by integrating the light source 203 and the driving circuit board 202b at the lower side of the display panel assembly 200, but the invention is not limited to the above-described configuration. Those components may be integrated at any one side in the vertical and horizontal directions, and the integration position may be appropriately selected depending on the structure of the display device.

In the display panel assembly 200 with the above-described configuration, the resinous front bezel 201 serves as the front cabinet of the related art and the metallic back chassis 204 serves as the back cabinet of the related art. Accordingly, it is possible to decrease the number of exterior components which is needed in the related art. In addition, it is possible to decrease the thickness and the weight of the display device and to narrow the frame of the peripheral edge of the display unit.

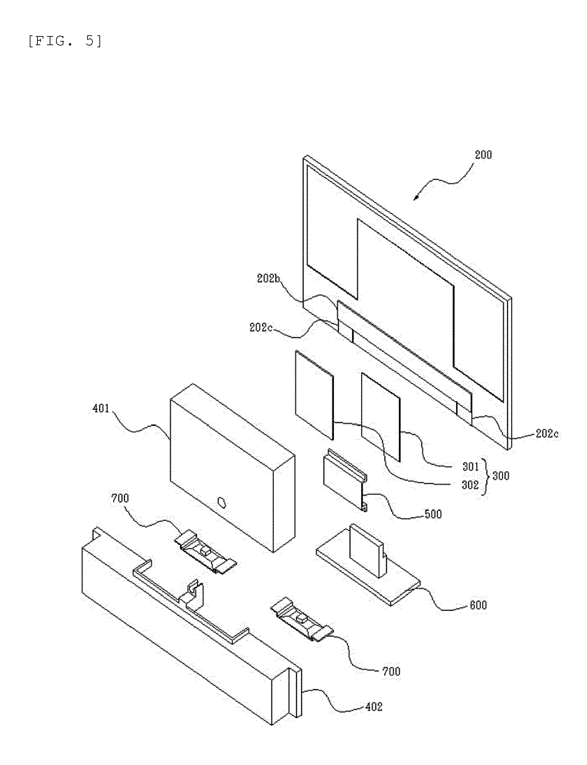

Next, a configuration of the display device including the display panel assembly 200 will be described. Fig. 5 is a rear exploded perspective view illustrating a configuration of the display device of the embodiment of the invention. The above-described driving circuit board 202b is attached to the lower side of the rear surface of the display panel assembly 200, and a substrate attachment portion (not illustrated) is substantially formed at the center thereof by raising or bending.

A control substrate 300 which includes a power supply unit and a control unit of the display device 100 is attached to the substrate attachment portion. The control substrate 300 may be one substrate or a plurality of substrates. Furthermore, in the embodiment, a description will be continued on the assumption that the control substrate is formed as two substrates, that is, a substrate (hereinafter, simply referred to as a power circuit board) 302 which includes a power supply circuit for supplying a power to the display device 100 and a substrate (hereinafter, simply referred to as a control circuit board) 301 which includes a control circuit for controlling a signal input from the outside and performing a display on the liquid crystal cell 202 as the display unit of the display panel assembly 200. Then, a cover member (hereinafter, referred to as a first cover member) 401 having a size of covering the power circuit board 302 and the control circuit board 301 attached to the substrate attachment portion of the back chassis 204 is attached thereto.

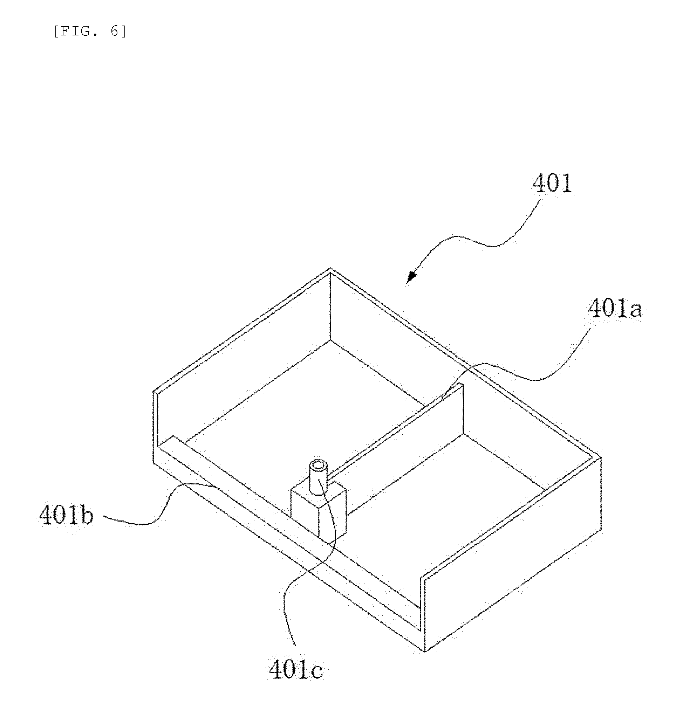

Fig. 6 is a perspective view illustrating an inner surface of a first cover member of the embodiment of the invention. As illustrated in the drawing, a partition rib 401 a which divides the power circuit board 302 and the control circuit board 301 is formed inside the first cover member 401. This is provided so as to prevent the breakage or the malfunction caused when the components or the wires of the control circuit board 301 contact the components of the high-voltage power circuit board 302. Furthermore, the method of attaching the power circuit board 302 and the control circuit board 301 is not limited to the configuration of the embodiment. For example, the substrate attachment portion may be formed at the inner surface of the first cover member 401 and the control substrate 300 may be attached thereto. Further, in the embodiment, the power supply circuit and the control circuit are formed as different substrates, but the power supply circuit and the control circuit may be integrated into one substrate.

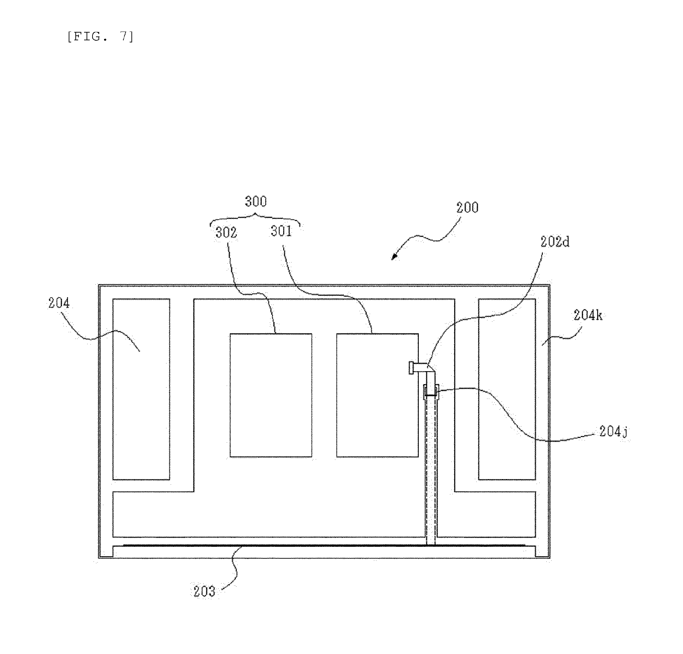

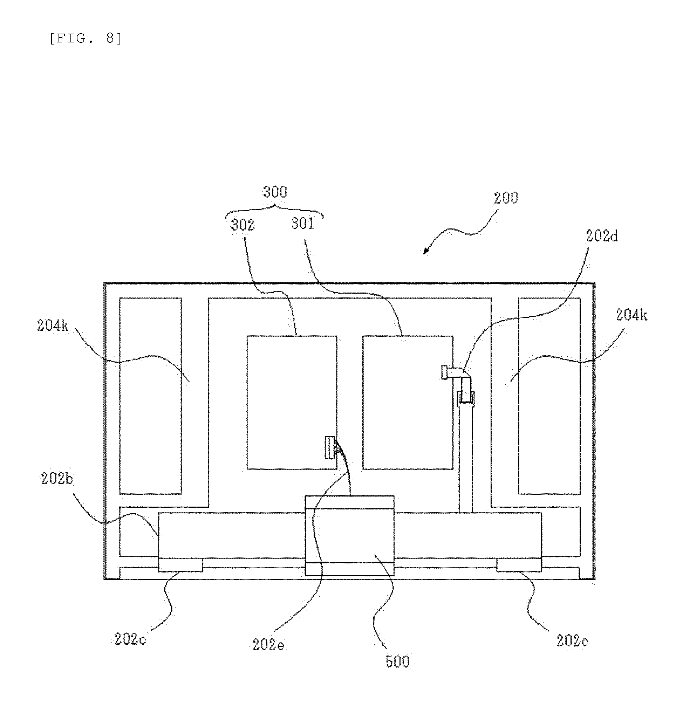

Fig. 7 is a schematic rear transparent view of a display panel assembly of the embodiment of the invention, and Fig. 8 is a rear view of the display panel assembly of the embodiment of the invention. As illustrated in the drawing, an LED substrate (hereinafter, referred to as an LED substrate 203) having a plurality of LEDs arranged thereon is used as the light source 203 inside the display panel assembly 200, and the LED substrate 203 and the control circuit board 301 are connected to each other by a flexible flat cable 202d. Then, the flexible flat cable 202d passes through a hole (hereinafter, referred to as an insertion hole) 204j which is formed in a rear surface 204a of the back chassis 204 so as to cause a wire to pass therethrough. Specifically, the insertion hole 204j through which the end of the flexible flat cable 202d protrudes is formed in the rear surface 204a of the back chassis 204 in the vicinity of the control circuit board 301 attached through the flexible flat cable 202d connected to the LED substrate 203 between the back chassis 204 and the reflection sheet 208. Furthermore, the flexible flat cable 202d is disposed between the back chassis 204 and the reflection sheet 208 at the step of assembling the display panel assembly 200.

With the above-described configuration, it is possible to reduce a portion where the flexible flat cable 202d is directly seen from the rear surface of the display panel assembly 200 and to prevent an unnecessary radiation by the contact between the metallic back chassis 204 and the flexible flat cable 202d. Accordingly, it is possible to reduce an operation and a member that coats the flexible flat cable 202d by a tape having a high insulation property.

Further, a support plate 500 is attached so as to traverse a part of the driving circuit board 202b attached to the lower side of the rear surface of the display panel assembly 200. The support plate 500 is formed of metal, and is provided so as to detachably attach a stand 600 thereto by a user from the bottom surface of the display panel assembly 200. Also, it is possible to prevent an unnecessary radiation of a connection wire 202e which connects the driving circuit board 202b and the power circuit board 302 to each other. That is, it is possible to prevent an unnecessary radiation by connecting the connection wire 202e to the power circuit board 302 through a gap between the driving circuit board 202b and the support plate 500, and to reduce an operation and a member that coats the connection wire 202e by a tape having a high insulation property.

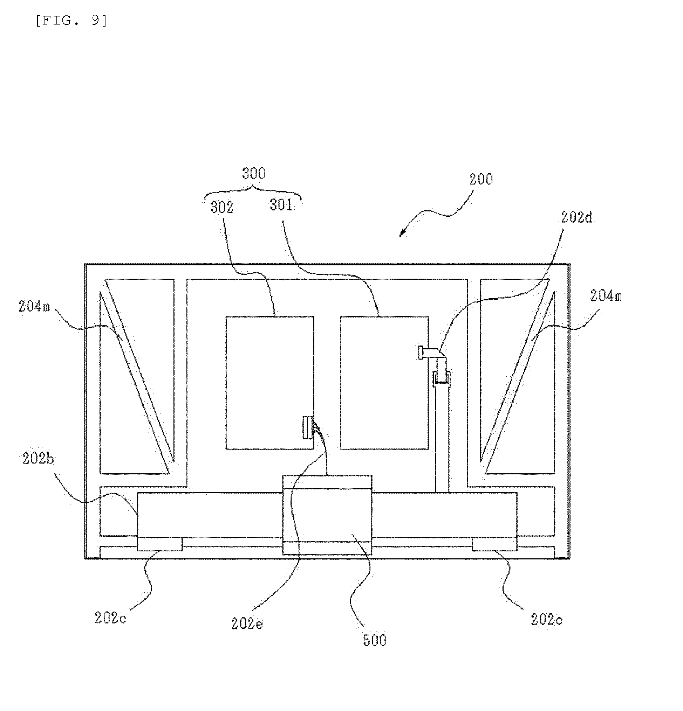

Further, the back chassis 204 is provided with steps 204k, 204k, ... which are continuously formed by drawing. When the embodiment is described in detail, the steps 204k, 204k, ... are respectively formed at the entire circumference of the back chassis 204 and positions which substantially trisect the back chassis 204. The steps 204k, 204k, ... reinforce the display panel assembly 200, and remove a gap between the rear surface 204a of the back chassis 204 and the first cover member 401 attached to the rear surface 204a so as to prevent the light emitted from the LED substrate 203 from leaking to the outside of the display device 100 from the substrate attachment portion and the like. Furthermore, in order to further reinforce the display panel assembly 200, the steps 204k, 204k, ... may be further provided with substantially triangular inclined portions or a plurality of inclined portions perpendicular to each other. Fig. 9 is a rear view of a display panel assembly of another embodiment of the invention. As illustrated in the drawing, it is possible to further improve the strength of the display panel assembly 200 by providing substantially triangular steps 204m and 204m.

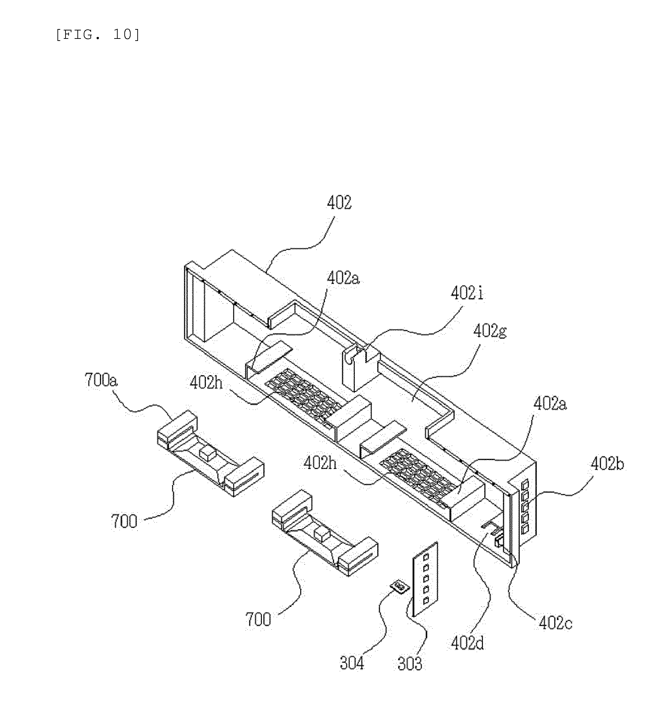

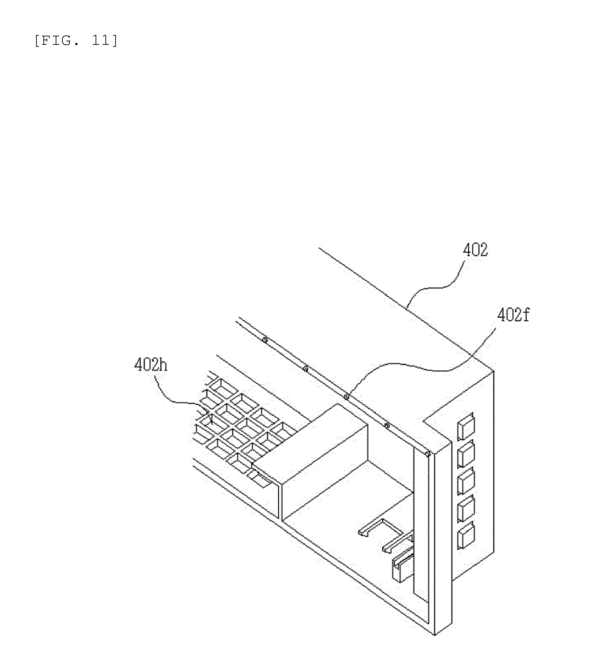

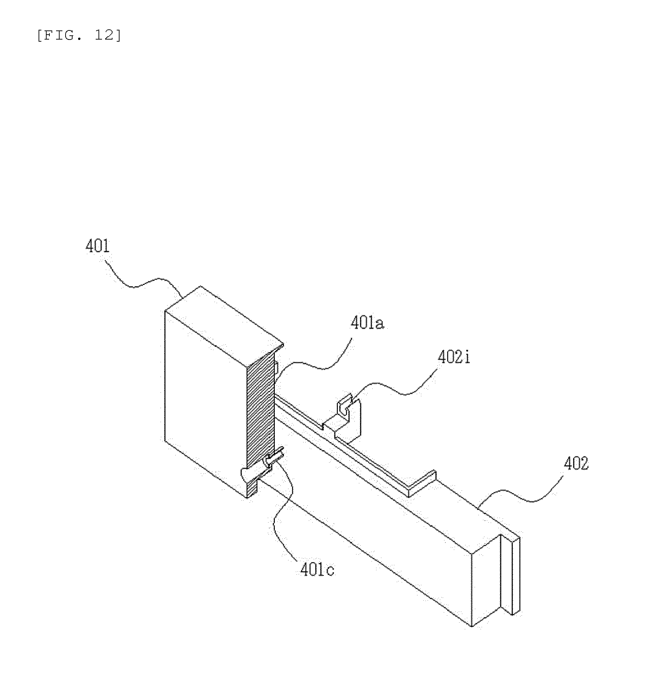

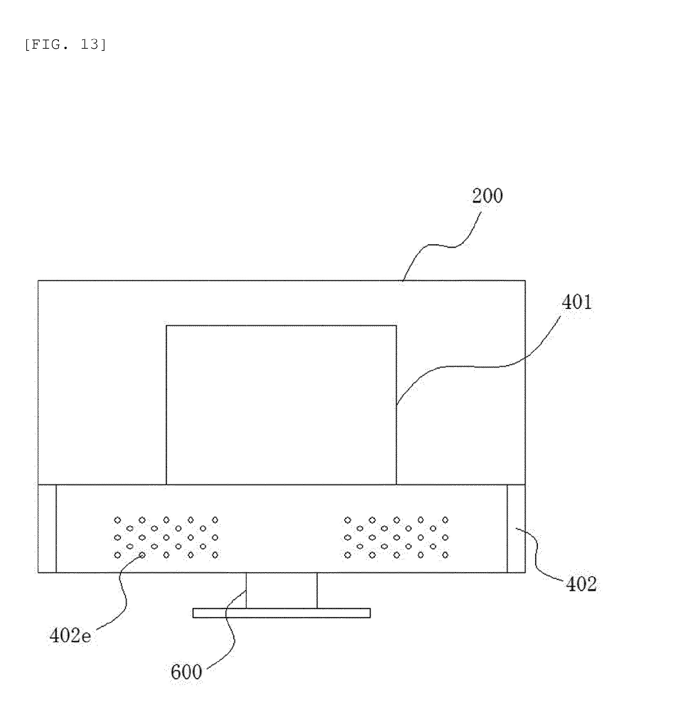

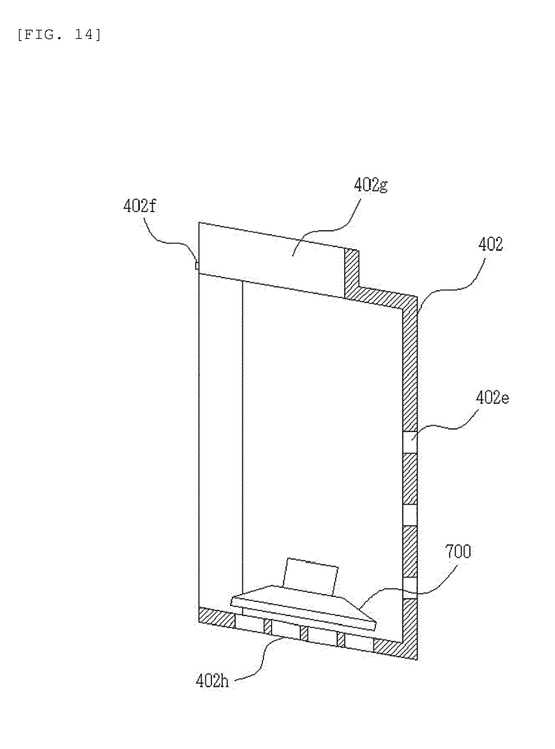

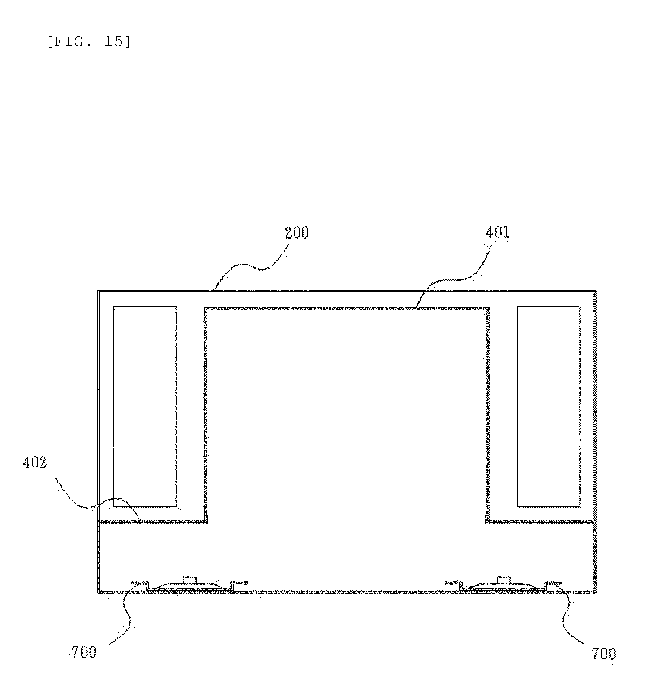

Fig. 10 is an exploded perspective view illustrating an inner surface of a second cover member of the embodiment of the invention, Fig. 11 is a partially enlarged perspective view illustrating the inner surface of the second cover member of the embodiment of the invention, Fig. 12 is a schematic partially cross-sectional perspective view illustrating a connection position between a first cover member and the second cover member of the embodiment of the invention, Fig. 13 is a schematic rear view illustrating the display device of the embodiment of the invention, Fig. 14 is a schematic side cross-sectional view illustrating the second cover member of the embodiment of the invention, and Fig. 15 is a schematic rear transparent view of the display device of the embodiment of the invention. A cover member (hereinafter, referred to as a second cover member) 402 having a size of covering the lower side of the rear surface of the display panel assembly 200 attached with the driving circuit board 202b and the support plate 500 is attached thereto. As illustrated in the drawings, in the embodiment, the second cover member 402 is provided with speaker attachment portions 402a and 402a, an operation portion 402b, an operation substrate attachment portion 402c, and a light receiving and emitting substrate attachment portion 402d.

Speakers 700 and 700 are attached to the speaker attachment portions 402a and 402a formed in the second cover member 402 through dampers 700a, 700a, ..., and the bottom surface of the second cover member 402 is provided with output holes 402h and 402h which output a sound output from the speakers 700 and 700 to the outside of the display device 100. In the embodiment, the sound output portion of the speaker 700 faces downward, but the output hole 402h is formed forward-slantingly at the bottom surface of the second cover member 402 so that the sound is output to the front side of the display device 1. For this reason, when attaching the second cover member 402 to the display device assembly 200, the bottom surface of the second cover member 402 is slightly inclined. Further, in order to improve the quality of the sound output from the speaker 700, a plurality of small holes 402e, 402e, ... are formed at the rear side of the speaker attachment portion 402a. Then, the first cover member 401 and the second cover member 402 are connected to each other, and a sound output from the speakers 700 and 700 attached to the speaker attachment portions 402a and 402a of the second cover member 402 is output through the inside of the first cover member 401, thereby improving the quality of the sound without additionally providing a speaker box. Further, it is possible to cause a heat generated inside the first cover member 401 and the second cover member 402 to dissipate through the small holes 402e, 402e, ... by the vibration of the speaker 700. Furthermore, a connection structure between the first cover member 401 and the second cover member 402 will be described later.

Further, in the embodiment of the invention, a plurality of convex portions 402f, 402f, ... are formed in the upper portion of the second cover member 402. The convex portions 402f, 402f, ... are attached so as to contact the back chassis 204, and are provided so as to suppress an unpleasant sound such as chatter noise which is generated when the second cover member 402 interferes with the back chassis 204 by the vibration of the speakers 700 and 700. Generally, as a method of suppressing the generation of the chatter noise, there is known a method of interposing a separate non-woven cloth. However, the chatter noise may be suppressed without the non-woven cloth by adopting a contact structure using the plurality of convex portions 402f, 402f, ... as in the embodiment. Furthermore, in the embodiment, a case has been described in which the convex portion 402f for suppressing the chatter noise is formed only at the upper portion of the second cover member 402. However, the invention is not limited to the above-described configuration, and if necessary, the convex portion 402f may be formed at a position where the second cover member 402 and the back chassis 204 contact each other.

Incidentally, one side surface of the second cover member 402 is integrated with the operation portion 402b having a plurality of pressing portions, and the inner surface of the operation portion 402b is provided with the operation substrate attachment portion 402c for attaching the operation substrate 303 provided with a plurality of switches. Then, the operation substrate 303 is attached to the operation substrate attachment portion 402c. Further, the second cover member 402 is provided with the light receiving and emitting substrate attachment portion 402d for attaching the light receiving and emitting substrate 304 provided with a light receiving portion and a light emitting portion. Then, the light receiving and emitting substrate 304 is attached to the light receiving and emitting substrate attachment portion 402d.

Furthermore, since the second cover member is attached to the display panel assembly 200, the front bezel 201 which is present at a position facing the light receiving and emitting substrate 304 is provided with a light receiving guide portion 201 h which guides a signal of a remote controller for remotely controlling the display device 100 to the light receiving portion and a light emitting guide portion 201 i which guides the light of the light emitting portion for visually recognizing the state of the display device 100 to the outside.

Further, the first cover member 401 and the second cover member 402 are connected to each other by being attached to the rear surface of the display panel assembly 200. That is, the lower side of the first cover member 401 is provided with a fastening boss 401c through which a screw is inserted, and the upper side of the second cover member 402 is provided with a connection boss 402i through which a screw is inserted while overlapping the fastening boss 401c. Then, the first cover member 401 and the second cover member 402 are attached to the rear surface of the display panel assembly 200, the fastening boss 401c and the connection boss 402i overlap each other, and then the bosses are screw-fastened to each other, thereby attaching the first cover member 401 and the second cover member 402 in a connected state.

Since the first cover member 401 and the second cover member 402 are connected to each other so as to substantially form an inverse T-shape, the display device 100 may be reinforced. Specifically, since the second cover member 402 substantially having the same width as that of the display panel assembly 200 is attached, the horizontal rigidity of the display device 100 may be obtained. Further, since the first cover member 401 and the second cover member 402 are connected to each other, the vertical rigidity of the display device 100 may be obtained.

Further, it is possible to improve the quality of the sound output from the speaker 700 by connecting the inner spaces through a first cover member opening portion 401 b and a second cover member opening portion 402g. Further, it is possible to cause the heat of the power circuit board 302, the control circuit board 301, the driving circuit board 202b, and the light source 203 to dissipate to the outside through the small holes 402e, 402e, by vibrating the internal air through the output of the speaker 700.

Furthermore, in the embodiment of the invention, it is desirable to paint the back chassis 204 constituting the rear surface of the display panel assembly 200 by the same color as those of the first cover member 401 and the second cover member 402. In particular, black painting is desirable. This is because a part of the back chassis 204 becomes the rear surface exterior portion of the display device 100 along with the first cover member 401 and the second cover member 402. Further, as another effect, since the back chassis 204 is painted in black, a heat dissipation effect for heat radiating components arranged on various substrates may be expected.

While the embodiment of the invention has been described in detail, the invention is not limited to the above-described embodiment, and may be modified into various forms without departing from the spirit of the invention.

### List of reference signs

- 100: display device
- 200: display panel assembly
- 201: front bezel
- 201h: light receiving guide portion
- 201i: light emitting guide portion
- 201j: material injection positions
- 202: liquid crystal cell
- 202b: driving circuit board
- 202c: flexible printed interconnection boards
- 202d: flexible flat cable
- 202e: connection wire
- 203: light source
- 204: back chassis
- 204j: insertion hole
- 204k: steps
- 204m: substantially triangular steps
- 205: light guiding plate
- 206: optical sheet
- 207: middle frame
- 208: reflection sheet
- 300: control substrate
- 301: control circuit board
- 302: power circuit board
- 303: operation substrate
- 304: emitting substrate
- 401: first cover member
- 401a: partition rib
- 401b: first cover member opening portion
- 401c: fastening boss
- 402: second cover member
- 402a: speaker attachment portions
- 402b: operation portion
- 402c: operation substrate attachment portion
- 402d: emitting substrate attachment portion
- 402e: small holes
- 402f: plurality of convex portions
- 402g: second cover member opening portion
- 402h: output holes
- 402i: connection boss
- 500: support plate
- 600: stand
- 700: speakers
- 700a: dampers
- 800b: fixed die

## Claims

1. A display device comprising:
a display panel assembly in which a member displaying a video picture is built in a space formed by a resinous front bezel and a metallic back chassis,
wherein the front bezel and the back chassis form an exterior of the device.

2. The display device according to claim 1, wherein
a first cover member which covers at least a control substrate and a second cover member which is formed so as to be longer than the first cover member in the horizontal direction at a position lower than the first cover member and covers the other component are disposed at a rear surface of the display panel assembly, and
wherein the first cover member and the second cover member substantially form an inverse T-shape.

3. The display device according to claim 2,
wherein the other component includes at least a speaker.

4. The display device according to claim 2 or 3,
wherein the component of the display panel assembly includes a light source, a liquid crystal cell, and a driving circuit board connected to the liquid crystal cell through a flexible printed interconnection board, and
wherein the light source is disposed at the lower side of the display panel assembly, the driving circuit board is disposed at the lower side of the rear surface of the display panel assembly, and at least the driving circuit board is covered by the second cover member.

5. The display device according to claim 2, 3 or 4,
wherein a step integrated with the back chassis is formed in the rear surface of the display panel assembly except for the installation position of the first cover member and/or the second cover member.

6. The display device according to claim 1,
wherein at least a speaker and a second cover member partially covering the speaker with respect to the back chassis are disposed in a rear surface of the display panel assembly, and wherein a bottom surface of the second cover member is provided with an output hole which outputs a sound of the speaker to the outside, and a plurality of small holes are provided behind the second cover member.

7. The display device according to claim 6,
wherein the second cover member is positioned at the lower side of the rear surface of the display panel assembly,
wherein at least a control substrate and a first cover member covering the control substrate are disposed at a position above the second cover member, and
wherein the first cover member and the second cover member substantially form an inverse T-shape, and the first cover member and the second cover member form a connection hole therein.

8. The display device according to claim 7,
wherein a plurality of protrusion portions are formed in a contact portion between the second cover member and the back chassis.

9. The display device according to claim 1 or 7,
wherein at least a speaker and a second cover member partially covering the speaker with respect to the back chassis are disposed in a rear surface of the display panel assembly, and wherein the speaker is attached to the second cover member through a cushion member, a bottom surface of the second cover member is provided with an output hole which outputs a sound of the speaker to the outside, and a plurality of small holes are provided behind the second cover member.

10. The display device according to claim 9,
wherein a plurality of protrusion portions are formed in a contact portion between the second cover member and the back chassis.

11. The display device according to claim 10,
wherein the second cover member is positioned at the lower side of the rear surface of the display panel assembly,
wherein at least a control substrate and a first cover member covering the control substrate are disposed at a position above the second cover member, and
wherein the first cover member and the second cover member substantially form an inverse T-shape, and the first cover member and the second cover member form a connection hole therein.
